# EUROPEAN PATENT SPECIFICATION

(11) **EP 3 379 794 B1**
(45) Date of publication and mention of the grant of the patent: **04.12.2019**
(21) Application number: 17460014.8
(22) Date of filing: 20.03.2017
(51) Int. Cl.: H04L 9/32, H04L 29/06

(54) **METHOD AND SYSTEM FOR REALISING ENCRYPTED CONNECTION WITH A LOCAL AREA NETWORK**
VERFAHREN UND SYSTEM ZUR REALISIERUNG VON VERSCHLÜSSELTER VERBINDUNG ZU EINEM LOKALEN NETZWERK
PROCÉDÉ ET SYSTÈME POUR RÉALISER UNE CONNEXION ENCRYPTÉE AVEC UN RÉSEAU DE ZONE LOCALE

(43) Date of publication of application: 26.09.2018
(73) Proprietor: LINKK spolka z ograniczona odpowiedzialnoscia, 25-663 Kielce (PL)
(72) Inventor: Kadziela, Adam, 85-796 Bydgoszcz (PL); Sroka, Bartosz, 31-325 Kraków (PL); Waligóra, Igor, 32-087 Zielonki (PL)
(74) Representative: Godlewski, Piotr

(56) References cited:
- US-A1- 2006 090 074
- US-A1- 2006 150 241
- US-A1- 2013 081 132

## Description

The object of the invention is a method of realising an encrypted connection with a local network, that is establishing a safe connection of a mobile device (telephone, tablet) with automation devices, for example of home automation, operating with wireless protocols via an open public network (Internet). The object of the invention is also a system of an encrypted connection to a local network, enabling safe and secret communication from a terminal (telephone, tablet) connected to the Internet from any place in the world.

An utility model related to the remote control of home automation devices is known from document CN204808029U. This solution provides a direct connection of the user's device to the home automation network by means of a VPN tunnel. The data is exchanged via switch and routers (Access point), that connect numerous home automation devices.

The application WO2015184382A9 discloses a method for remote control of home automation devices. In the described solution, a user's device is used (e.g. a smartphone). There is also a device serving as a gateway, and it contemplated to use a cloud, which only serves as a remote disc, on which the users' data is saved - it does not serve any function during the routing or transmitting of data. The solution does not use a VPN tunnel or a direct connection of the user's device to a proxy device.

A system and a method of connecting two networks which use different protocols is known from patent application US20140266592A1. A user's device (e.g. a smartphone) and an indirect connection by means of a cloud are used in this solution. A device functioning as a gateway can also be discerned. The keys used in encrypting the connection are not created in the user's device and at none of the steps is a VPN tunnel used. Furthermore, the cloud serves the function of a network drive, and in one of the embodiments additionally serves the function of a gateway.

A solution based on the application layer protocols (HTTPS) which requires a client - server communication model is known from the application US 20150120943. The solution described in that document enables the communication of the application with numerous devices and the receipt of communication from numerous devices without the need to establish a connection. A proxy using a VPN connection and a SOCKS protocol (socket secure) is used in the solution.

A system and a method for connecting a device to a home automation network is known from the document US20160105424A1. The solution describes the use of a cloud, two connections which transmit the data from the user to the home automation network. The solution provides the use of a VPN tunnel. A user's device (e.g. a smartphone), a VPN tunnel and an indirect connection are used in the described solution (there is no direct connection between the user's device and the home automation). Additionally, the keys used in encrypting the connection are also created in the user's device. The cloud is not an intermediary between the user and the home automation. The solution uses known communication encryption standards along the whole data transfer route without any possibility of interference and insight into the communication by third parties, including the providers of intermediary services (telecommunications service provider, the provider of the above-mentioned service).

US 2013/081132 A1 discloses a method for establishing secured communication between a client and a VPN server via a VPN service apparatus. A private network, e.g., company internal system, is connected to the VPN server. The connections between the client and the VPN gateway, the VPN gateway and the server are respective encrypted VPN connections.

US 2006/090074 A1 discloses a method for establishing an encrypted connection between a client and a server in an Intranet via a VPN gateway.

US 2006/150241 deals with access authentication of network devices using look-up table with public keys of the single devices.

The currently available solutions ensuring remote communication with home automation devices are based on a central control unit. Such a device communicates directly with the sensors and actuators and it comprises logic which controls them. The central units communicate with the systems outside the premises, and in particular with a remote terminal (smartphone, tablet) by means of encrypted protocols such as SSL, or the HTTPS protocol based thereon. In such a model the device has freedom to interfere and read the communication in which it intermediates, in a particular case the central unit can in any manner aggregate and transmit to the service provider's system the information on the action and status of the building automation system.

The solution according to invention enables safe communication along the whole data transfer route without the possibility of interference and insight into the communication by third parties, including the providers of intermediary services (telecommunications service provider, the provider of the above-mentioned service). Additionally, it enables simple communication, the verification of devices and keys, ensuring the anonymity of the transmitted data within the cloud. This solution also ensures establishing an easy connection to the devices of the LAN network, which are not directly visible in a public network and their address can frequently change.

The features of the method and system according to the present invention are defined in the independent claims, and the preferable features according to the present invention are defined in the dependent claims.

The method of realising an encrypted connection to a local network is characterised in that it comprises the following steps:
- connecting the gateway of a local network to a VPN router by means of an internal VPN tunnel;
- verifying the gateway of a local network based on a private key of the gateway of a local network and a base of relations of public keys;
- connecting the client application to the VPN router via an external VPN tunnel;
- transmitting the public key to the VPN router by the client application;
- comparing the public key of the client application with the known sets of public keys by the VPN router;
- upon the verification of the public key of the client application, routing the connection between the client application and the gateway of a local network, in accordance with the previously established relation between the public keys of the client application and the public key of the gateway of a local network, via an external VPN tunnel and an internal VPN tunnel;
- verifying the public key of the client application by the gateway of a local network and the public key of the gateway of a local network by the client application;
- transmitting by the gateway of a local network a secret key of symmetrical encryption encrypted by means of the public key of the client application to the client application;
- exchanging encrypted packages between the local network and the client application.

Preferably, during production, the private key of the gateway of a local network is uploaded into the gateway of a local network.

Preferably, the public key and/or the private key are generated in the client application.

Preferably, the public key of the client application and the public key of the gateway of a local network are exchanged directly between the client application and the gateway of a local network, before the client application connects to the VPN router.

Preferably, the public keys of the client application and the gateway of a local network are transmitted to the VPN router, which establishes a relation between the public keys of both sides.

Preferably, the VPN router is implemented as a server in a public network.

Preferably, the internal VPN tunnel is created while connecting the gateway of a local network to a public network.

Preferably, the client application issues commands and/or downloads data from an automation device.

Preferably, the VPN router has in its database a set of public keys of the gateways of a local network and the public keys of client applications along with the information on the relation between the public keys of client applications and the public keys of the gateways of a local network.

The system of realising an encrypted connection to a local network is characterised in that it comprises a client application connected via an external VPN tunnel to the VPN router, which in turn is connected to the gateway of a local network via an internal VPN tunnel.

Preferably, the gateway of a local network is connected to at least one automation device.

Preferably, the gateway of a local network is connected to at least one automation device via at least one among: wireless connection, in particular in accordance with the Bluetooth, Wi-Fi, ZigBee standards, by wire or by fibre optic.

Preferably, the gateway of a local network is connected by wire and/or wirelessly to a public network.

Preferably, in the gateway of a local network the cryptography is realised by software and/or by hardware.

The following technologies have been used in the solution in question:
- OpenVPN - an input gateway for an internal VPN tunnel;
- OpenSWAN - an input gateway for a mobile device with the client application;
- WebSocket - an alternative encryption method for the input gateway of the client application;
- AES256 - an encryption algorithm for the connection between the Client Application and the gateway of a local network;
- RSA2048 (RSA) - an asymmetrical encryption algorithm with VPN access, for both tunnels, protecting the exchange of the key;
- DH4096 (Diffie-Hellman) - an algorithm protecting the exchange of the key;
- HTTPS (TLS) technology - enables establishing a connection between the client application and the gateway of a local network.

In the method and system the encrypted connections realised via the VPN tunnels can also be realised via a different encrypting protocol. The solution according to invention uses recognised communication encryption standards along the whole data transfer route without any possibility of interference and insight into the communication by third parties, including the providers of intermediary services (telecommunications service provider, the provider of the above-mentioned service).

In the solution in question the gateway of a local network can be a router and/or an internet modem.

In the solution according to invention the VPN router can be a dedicated client server, a service provider server, or it can be implemented in cloud technology.

In the solution in question the public keys are stored in a database in the VPN router (in the cloud).

In the solution, in the gateway of a local network, the standards of cryptography based on the public key are used for authentication, in combination with the certification of the issued keys. Depending on the required safety level, or the specific requirements of the client, the used standard can be PKCS #8, PKCS #11 or PKCS#12.

Certificates confirming the correctness of connection to a credible server are uploaded into the gateway of a local network during the stage of production, optionally, using a safe container for the storage of passwords - TPM, which allows direct linking the physical gateway of a local network to an object in the database of an intermediary server (VPN router).

The key in ensuring the scalability of the solution is the implementation of the method based on virtual containers enabling a smooth increase in the available computing power and thus the possibilities of operating the devices of the method and system installed in the subsequent clients.

The client application used in the solution in question can be a smartphone, a tablet, a PDA, etc.

The solution in question provides:
- a safety level of the transmitted data corresponding to the safety of transaction systems used by banks for retail customers;
- the impossibility of any interference and insight in the communication by third party persons, including the providers of services upon which the communication is based;
- the possibility to communicate with the automation, in particular home, from any place in the world, assuming the Internet can be accessed.

One of the advantages of the system and method according to invention is the connection of a physical gateway of a local network and a cloud, a part of which is the VPN router.

The solution in question allows the connection of multiple system users, via VPN tunnels, authorising them in the cloud, as a result of which it is possible to control the IoT devices in remote locations.

A significant problem in solutions enabling a remote connection to a home automation network is the method of establishing a connection with the client device located in home network, behind the WAN router creating a NAT layer (Network Address Translation). In the solution in question, the VPN router is a service possible to locate and available at a permanent DNS address, which enables establishing a connection from any sub-network, and due to the direction of establishing the connection (the connection always exits from a local network) the problem of blocking selected ports by the Internet provider is non-existent, the issue of a dynamically transmitted (and thus changeable) IP address of the sub-network and the issue of identifying the device after the NAT service have no importance.

The cloud which the VPN router is a part of, ensures a safe connection, constituting an authorisation centre for both the gateway of a local network as well as the client application. Each time when attempting to connect to the cloud of both the physical gateway of a local network as well as the client application, both the public keys (authorisation) as well as the client's possession of a private key (authentication) are verified.

Verifying the identity takes place based on asymmetrical cryptography, only the public, transparent, safe parts of the keys being in the cloud, due to which the VPN router does not store any sensitive data, just serving the function of a router when managing sub-networks for each gateway of a local network and the client applications belonging to the persons authorised to access the given sub-network.

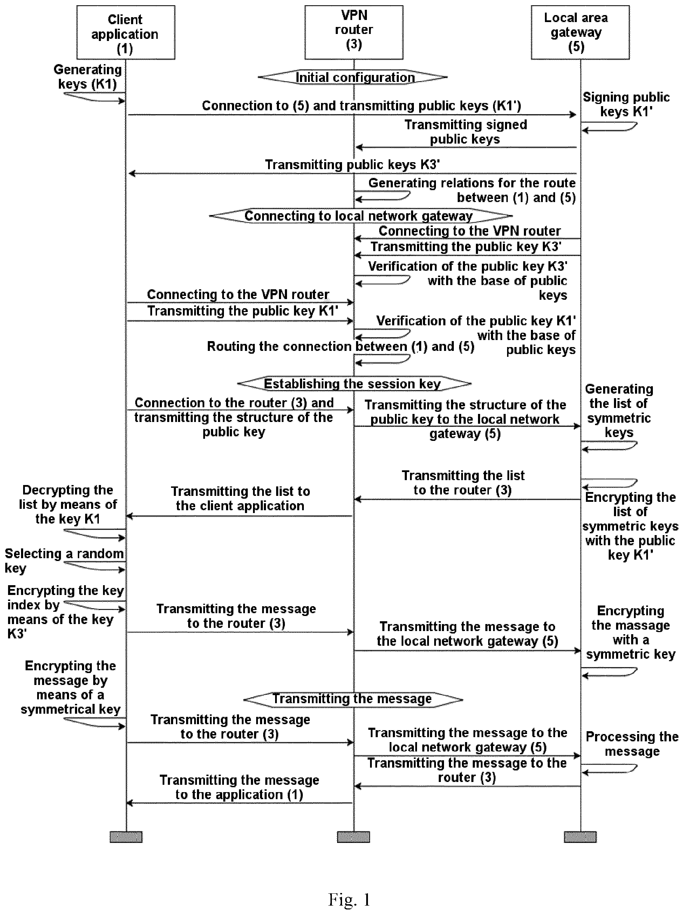

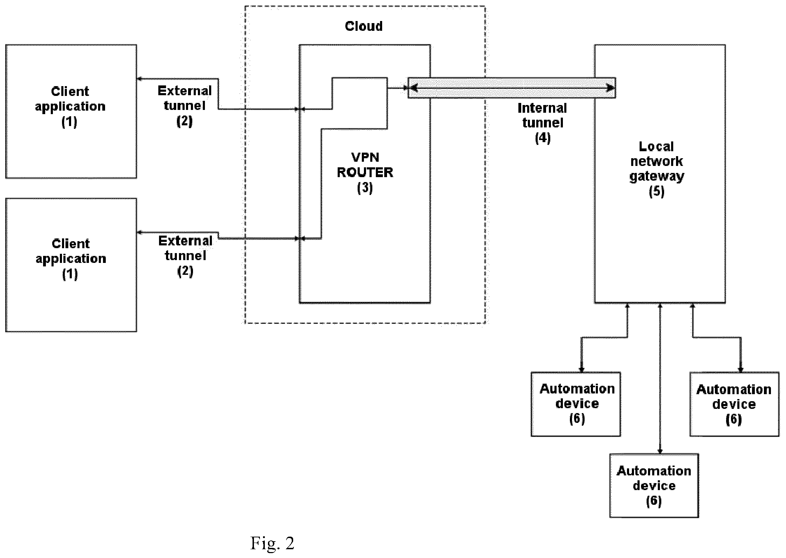

The object of the invention is presented in a drawing, in which fig. 1 presents an MSC diagram of the method according to the invention, fig. 2 - presents a flowchart of the method according to invention.

The method of realising an encrypted connection to a local network, in an embodiment, assumes the connection of a mobile device (client application 1) to a gateway 5 of a local network enabling the connection to home automation devices 6, such as BLE devices - devices provided with a Bluetooth Low Energy radio communication module.

The connection is realised via the management of two VPN tunnels 2 and 4 (Virtual Private Network), the first one, external, between the client application 1 and the VPN router 3, and the second one, internal, between the gateway 5 of a local network and the VPN router 3, that is an intermediary server. In another embodiments the connection is realised by means of a different communication encryption technology.

The VPN router 3 realises the routing of packages, determines the route of the packages based on entries into the database, involving the link between the client application 1 and the corresponding gateway 5 of a local network.

The communication between devices is encrypted by a symmetrical key, agreed upon during the stage of establishing the symmetrical key of the session, generated or selected, when connecting to the VPN router service, regenerated every established interval. The communication between the client application 1 and the VPN router 3, as well as the gateway 5 of a local network is also encrypted in the VPN connection, which makes it virtually impossible for any third party persons to eavesdrop on a decrypted traffic.

In another embodiment of the method of realising an encrypted connection to a local network to gateway 5 of a local network, during production, the private key K3 of the gateway of a local network is uploaded into the PKCS#11 structure. The structure is signed by the VPN router 3 (primary certificate).

The gateway 5 of a local network connects to the router by itself, after it becomes connected to the Internet, creating an internal VPN tunnel 4. In another embodiment, the connection is made via the openVPN application, and the certificates are created by openssl tools.

In another embodiment realised before the first connection of the client application 1 to the gateway 5 of a local network via the VPN router 3 - the public key K1', K2' or the private key K1, K2 are generated by means of openssl libraries, in the client application 1 along with the certificate placed in the PKCS#11 structure. In other embodiments, PKCS#12 or PKCS#8 structures can be used instead of the above-mentioned PKCS#11 structure.

Furthermore, the public key K1', K2' of the client application 1 and the public key K3' of the gateway 5 of a local network are exchanged directly between the client application 1 and the gateway 5 of a local network, before the client application 1 connects to the VPN router 3.

The public parts of structures, the public keys K1', K2', K3', are transmitted to the VPN router 3. In one embodiment the transmission is realised via an application on the side of the gateway 5 of a local network, on REST API, by means of the HTTPS protocol. The VPN router 3 establishes a relation between the public keys K1', K2', K3' (Common Name) of both sides. The Common Name information and IP addresses are entered into the database by means of REST API, and during the subsequent connections the address of the service, on which the connection will be required, will be downloaded automatically.

In another embodiment of the method of realising an encrypted connection to a local network, in which the relations between the public keys K1', K2', K3' of the client application 1 and the gateway 5 of a local network are established and saved in the database of the VPN router 3, the gateway 5 of a local network connects to the VPN router 3 by means of an internal VPN tunnel 4, which is created while connecting the gateway 5 of a local network to a public network. Subsequently, the gateway 5 of a local network is verified by the VPN router 3 based on the comparison of the public key K3' with a set of known public keys. Further, the client application 1 connects to the VPN router 3 via an external VPN tunnel 2. On the side of the VPN router 3 the connection can be established by means of websockets or openSWAN. The client application 1 transmits its public key K1', K2' to the VPN router 3, which compares the public key K1', K2' of the client application 1 to the known sets of public keys. Upon the verification of the public key K1', K2' of the client application 1, the VPN router 3 realises the routing of the connection between the client application 1 and the gateway 5 of a local network, in accordance with the previously established relation between the public keys K1', K2' of the client application 1 and the public key K3' of the gateway 5 of a local network. The routing of the connection is realised via an external VPN tunnel 2 and an internal VPN tunnel 4, in other words, by means of the standard tools of Linux iptables responsible for the route, and the radius responsible for the authorisation, a path (routing path) is built between the recipient of the structure, for example PKCS#11, and the gateway 5 of a local network. By means of the https (TLS) technology, a connection between the client application 1 and the gateway 5 of a local network is established. Verification of the public key K1', K2' of the client application 1 by the gateway 5 of a local network, and of the public key K3' of the gateway 5 of a local network by the client application 1 takes place. The gateway 5 of a local network transmits a secret key of symmetrical encryption encrypted by means of the public key K1', K2' of the client application 1 to the client application 1. The gateway 5 of a local network and the client application 1 exchange the secret in order to encrypt the connection by means of a symmetrical algorithm, for example AES256. The encryption is possible due to the cryptc++ library of the C++ language. The encrypting algorithm AES256 is also used in TLS/SSL. Upon the realisation of the above steps, a safe connection, encrypted end-2-end, is possible between the client application 1 and the gateway 5 of a local network, and further the peripheral home automation devices 6, operating in any system and protocol.

In another embodiment, the VPN router 3 is implemented as a server in a public network; for example, it can be implemented in cloud technology.

In another embodiment, the client application 1 issues commands and/or downloads data from the automation device 6 upon managing a safe and anonymous connection via the gateway 5 of a local network and the cloud, meaning the VPN router 3. In various embodiments the automation devices 6 can be, for example, actuators and sensors or other building automation devices. On the other hand, in the various embodiments the client application 1 can be a smartphone, a tablet, a PDA.

In another embodiment the system of an encrypted connection to a local network according to the invention comprises the client application 1, for example, a smartphone, a tablet, a PDA, which is connected via an external VPN tunnel 2 to the VPN router 3, for example by means of a cloud. The VPN router 3 is also connected to the gateway 5 of a local network via an internal VPN tunnel 4. In other embodiments the above-mentioned connections are realised via a different encryption protocol. On the other hand, the gateway 5 of the local network is connected to an automation device (devices) 6. In various embodiments the automation devices 6 can be, for example, actuators and sensors or other building automation devices.

In another embodiment of the system of an encrypted connection according to the invention, the gateway 5 of a local network is connected by wire to the public network. In another embodiment, the gateway 5 of a local network is connected wirelessly to the public network. In various embodiments, the gateway 5 of a local network is directly connected to a public network; in another embodiment there is an indirect connection.

In one embodiment, in the gateway 5 of a local network the cryptography is realised by software, in another embodiment the cryptography is realised by hardware, or simultaneously by software and by hardware.

In one embodiment, both the gateway 5 of a local network, as well as the mobile device use a VPN connection; the exchange of the key between the gateway 5 of a local network and the client application 1 is protected by the RSA2048 (RSA) algorithm, on the other hand, the exchange of the key with an OpenVPN connection is protected by the DH4096 algorithm (Diffie-Hellman). The communication inside the VPN channels itself is encrypted by the AES256 (AES2) algorithm, ensuring adequate safety of communication.

In further embodiments, the automation device 6 is provided with a Bluetooth Low Energy radio communication module. The solution according to the invention enables communication with any Bluetooth Low Energy device, provided the application interface (API) of the given device in the client application 1 has been previously implemented. Because the gateway 5 of a local network and the VPN router 3 does not interfere with the communication, just transmitting subsequent packages of the Bluetooth protocol between the automation device 6 and the client application 1, it is possible to adjust the client application 1 to handle multiple actuators, sensors or other building automation devices. In particular, such a solution is adjusted to handle communication standards built based on a Bluetooth protocol, such as Bluetooth Mesh.

In further embodiments, the connection between the gateway 5 of a local network via an automation device (devices) (6) is realised as: wireless, in particular in accordance with the Wi-Fi, ZigBee standards, by wire or by fibre optic.

In another embodiment, the gateway 5 of a local network disables the tunnelling of communication between the building automation devices 6 provided with a Bluetooth Low Energy communication module and the client application 1 in the mobile device. The gateway 5 of a local network is provided with Bluetooth communication modules, for example BLE 2,4 GHz, and modules for communication with a local network (LAN) as well as a WiFi module. The device must ensure computing power allowing the activation of an operating system from the UNIX/Linux family, the handling of peripherals and the encryption of ongoing communication by means of symmetrical algorithms.

In another embodiment, in the gateway 5 of a local network, a hardware signature and certificate verification (TPM) module can be used, additionally increasing the safety level. The most important function of the operation of the gateway 5 of a local network is the method of encrypting and transmitting packages of Bluetooth protocol to the VPN router 3 by means of the managed Open VPN connection. The gateway 5 of a local network has the access to the public keys (K1', K2') of trustworthy clients (mobile applications), which enables their verification and establishing a safe method of communication.

In another embodiment, the VPN router 3 operates in public infrastructure enabling the management of safe connections from gateway 5 of a local network and the client applications 1. The VPN router 3 has the functionality of automatic management of safe connections to the gateway 5 of a local network and the client application 1 (routing) based on the RSA keys and certificates authenticating both the gateway 5 of a local network as well as the client application 1.

The main functionalities of the VPN router 3 are:
- managing the certificates - the VPN router 3 manages the keys and authenticating certificates of the gateway 5 of a local network and of the client application 1. The public keys K3' RSA (RSA 2048) of the gateways 5 of a local network are stored in the service of the VPN router 3, along with the public keys K1', K2' RSA of the client applications 1 and the assignment relations between them, based on which safe connections are managed, meaning the internal tunnel 5 and the external tunnel 2 between the elements of the system;
- managing the networks for safe communication of the gateway 5 of a local network with the client application 1 (routing), the VPN router 3 creates an isolated sub-network in a limited IP addressing class, and subsequently manages the routing packages from the VPN tunnels 2, 4 from the side of the gateway 5 of a local network and the client application 1. The VPN tunnels 2, 4 possible to be connected to one sub-network are determined based on the assignment of RSA public keys stored by the VPN router 3. In order to avoid erroneous management of VPN tunnels 2, 4, the gateway 5 of a local network terminating the connection has the public key K1', K2' of the client application 1 for additional verification.

In another embodiment, the client application 1 is activated in a mobile device (for example, a smartphone, a tablet, a PDA) and realises establishing an external tunnel 2 OpenSWAN from the VPN router 3. The client application 1 should be understood as, in particular, libraries for Android and iOS platforms prepared and provided along with the gateway 5 of a local network for their use in the client network for building automation devices 6, by doing so enabling safe communication with the automation devices 6 via a public network. Functionally, the libraries enable:
- communication with automation devices 6 by means of the BLE protocol via a native telephone module;
- communication with automation devices 6 via the VPN router 3 and the gateway 5 of a local network in accordance with the solution in question;
- managing and handling public and private keys of the individual devices and certificates necessary to establish a safe connection.

The embodiments presented herein serve only as not limiting indications related to the invention and cannot in any way limit the scope of protection, which is defined by the patent claims.

## Claims

1. A method of realising an encrypted connection to a local network comprising the following steps:
- exchanging directly between a client application (1) and a gateway (5) of the local network a public key (K1', K2') of the client application (1) and a public key (K3') of the gateway (5), before the client application (1) connects to a VPN router (3);
- sending by the client application (1) and by the gateway (5) respectively, the public key (K1', K2') of the client application (1) and the public key (K3') of the gateway (5) to the VPN router (3) that establishes a relationship of the public keys (K1', K2', K3'),
- connecting the gateway (5) to the VPN router (3) by means of an internal VPN tunnel (4);
- verifying, by the VPN router (3), the gateway (5) based on the public key (K3') of the gateway (5) and the relationship of the public keys;
- connecting the client application (1) to the VPN router (3) via an external VPN tunnel (2);
- transmitting by the client application (1) its public key (K1', K2') to the VPN router (3);
- verifying the public key (K1', K2') of the client application (1) based on the relationship of the public keys by the VPN router (3);
- upon the verification of the public key (K1', K2') of the client application (1), routing, by the VPN router (3), the connection between the client application (1) and the gateway (5), in accordance with the relationship of the public keys (K1', K2', K3') via the external VPN tunnel (2) and the internal VPN tunnel (4);
- after the routing of the communication, verifying the public key (K1', K2') of the client application (1) by the gateway (5) and verifying the public key (K3') of the gateway (5) by the client application (1);
- transmitting by the gateway (5) a secret key of symmetrical encryption encrypted by means of the public key (K1', K2') of the client application (1) to the client application (1);
- obtaining, by the client application (1), the encrypted secret key by using a private key (K1, K2) of the client application (1) corresponding to the public key (K1', K2') of the client application (1) to decrypt the encrypted secret key,
- exchanging encrypted packages between the local network and the client application (1) using the secret key.

2. The method according to claim 1, wherein during production a private key (K3) of the gateway (5) of a local network is uploaded into the gateway (5) of a local network.

3. The method according to claim 1, wherein the public key (K1', K2') and/or the private key (K1, K2) are generated in the client application (1).

4. The method according to claim 1, wherein the VPN router (3) is implemented as a server in a public network.

5. The method according to claim 1, wherein the internal VPN tunnel (4) is created while connecting the gateway (5) of a local network to a public network.

6. The method according to claim 1, wherein the client application (1) issues commands and/or downloads data from an automation device (6).

7. The method according to claim 1, wherein the VPN router (3) has in database a set of public keys of the gateways of a local network and the public keys of client applications along with the information on the relation between the public keys of client applications and the public keys of the gateways of a local network.

8. A system comprising means configured to carry out the method according to any claim 1 to 7, wherein the system further comprises a client application (1) connected via an external VPN tunnel (2) by means of WebSocket to a VPN router (3), which in turn is connected to a gateway (5) of a local network via an internal VPN tunnel (4).

9. The system according to claim 8, wherein the VPN router is in a cloud.

10. The system according to claim 8 to 9, wherein the gateway (5) of a local network is connected to at least one automation device (6).

11. The system according to claim 10, wherein the gateway (5) of a local network is connected to at least one automation device (6) via at least one among: wireless connection, by wire or by fibre optic.

12. The system according to claim 11, wherein the wireless connection is realised in accordance with one of the Bluetooth, Wi-Fi, ZigBee standards.

13. The system according to claim 8 to 12, wherein the gateway (5) of a local network is connected by wire and/or wirelessly to a public network.

14. The system according to claim 8 to 13, wherein the gateway (5) of a local network the cryptography is realised by software and/or by hardware.

## Patentansprüche

1. Ein Verfahren zur Errichtung einer verschlüsselten Verbindung zu einem lokalen Netzwerk, umfassend die folgenden Schritte:
- Austausch direkt zwischen der Client-Anwendung (1) und dem Gateway (5) im lokalen Netzwerk in Bezug auf den öffentlichen Schlüssel (K1', K2') der Client-Anwendung (1) und den öffentlichen Schlüssel (K3') des Gateways (5), bevor die Client-Anwendung (1) mit dem VPN-Router (3) verbunden wird;
- Senden des öffentlichen Schlüssels (K1', K2') der Client-Anwendung (1) und des öffentlichen Schlüssels (K3') des Gateways (5) an den VPN-Router (3) entsprechend durch die Client-Anwendung (1) und durch das Gateway (5), das eine Verknüpfung zu den öffentlichen Schlüsseln (KT, K2', K3') aufbaut,
- Verbinden des Gateways (5) mit dem VPN-Router (3) über einen internen VPN-Tunnel (4);
- Überprüfung des Gateways (5) durch den VPN-Router (3), basierend auf dem öffentlichen Schlüssel (K3') des Gateways (5) und der Verknüpfung zwischen den öffentlichen Schlüsseln;
- Verbinden der Client-Anwendung (1) mit dem VPN-Router (3) über einen externen VPN-Tunnel (2);
- Übertragen des öffentlichen Schlüssels (K1', K2') durch die Client-Anwendung (1) an den VPN-Router (3);
- Überprüfung des öffentlichen Schlüssels (K1', K2') der Client-Anwendung (1) auf der Grundlage der Verknüpfung der öffentlichen Schlüssel durch den VPN-Router (3);
- nach der Überprüfung des öffentlichen Schlüssels (K1', K2') der Client-Anwendung (1), Routing der Verbindung zwischen der Client-Anwendung (1) und dem Gateway (5) durch den VPN-Router (3) gemäß der Verknüpfung der öffentlichen Schlüssel (K1', K2', K3') über den externen VPN-Tunnel (2) und den internen VPN-Tunnel (4);
- nach dem Routing der Kommunikation, Verifizierung des öffentlichen Schlüssels (K1', K2') der Client-Anwendung (1) durch das Gateway (5) und Verifizierung des öffentlichen Schlüssels (K3') des Gateways (5) durch die Client-Anwendung (1);
- Übertragen eines geheimen Schlüssels symmetrischer Verschlüsselung durch das Gateway (5), der mit Hilfe des öffentlichen Schlüssels (K1', K2') der Client-Anwendung (1) verschlüsselt wird, an die Client-Anwendung (1)'
- Empfang des verschlüsselten geheimen Schlüssels durch die Client-Anwendung (1) unter Verwendung eines privaten Schlüssels (K1, K2) der Client-Anwendung (1), der dem öffentlichen Schlüssel (K1', K2') der Client-Anwendung (1) entspricht, um den verschlüsselten geheimen Schlüssel zu entschlüsseln,
- Austausch verschlüsselter Pakete zwischen dem lokalen Netzwerk und der Client-Anwendung (1) unter Verwendung des geheimen Schlüssels.

2. Ein Verfahren nach Anspruch 1, wobei während der Produktion ein privater Schlüssel (K3) des Gateways (5) eines lokalen Netzwerks in das Gateway (5) eines lokalen Netzwerks hochgeladen wird.

3. Ein Verfahren nach Anspruch 1, wobei der öffentliche Schlüssel (K1', K2') und/oder der private Schlüssel (K1, K2) in die Client-Anwendung (1) erzeugt werden.

4. Ein Verfahren nach Anspruch 1, wobei der VPN-Router (3) als ein Server in einem öffentlichen Netzwerk implementiert wird.

5. Ein Verfahren nach Anspruch 1, wobei der interne VPN-Tunnel (4) beim Aufbau der Verbindung zum Gateway (5) eines lokalen Netzwerks mit einem öffentlichen Netzwerk generiert wird.

6. Ein Verfahren nach Anspruch 1, wobei die Client-Anwendung (1) Befehle ausgibt und/oder Daten von einem Automatisierungsgerät (6) herunterlädt.

7. Ein Verfahren nach Anspruch 1, wobei der VPN-Router (3) über einen Satz öffentlicher Schlüssel der Gateways eines lokalen Netzwerks in seiner Datenbank
und die öffentlichen Schlüssel der Client-Anwendungen, zusammen mit den Angaben zu der Verknüpfung zwischen den öffentlichen Schlüsseln der Client-Anwendungen und den öffentlichen Schlüsseln der Gateways eines lokalen Netzwerks verfügt.

8. Die im System enthaltenen Mittel sind konfiguriert, um das Verfahren nach einem der Ansprüche 1 bis 7 umzusetzen, wobei das System darüber hinaus eine Client-Anwendung (1) umfasst, die über einen externen VPN-Tunnel (2) mittels WebSocket mit einem VPN-Router (3) verbunden ist, der wiederum über einen internen VPN-Tunnel (4) mit einem Gateway (5) eines lokalen Netzwerks verbunden ist.

9. Ein System nach Anspruch 8, wobei sich der VPN-Router in einer Cloud befindet.

10. Ein System nach Anspruch 8 bis 9, wobei das Gateway (5) eines lokalen Netzwerks mit mindestens einem Automatisierungsgerät (6) verbunden ist.

11. Ein System nach Anspruch 10, wobei das Gateway (5) eines lokalen Netzwerks mit mindestens einem Automatisierungsgerät (6) über mindestens eine der folgenden Optionen: kabellose und Kabelverbindung oder über Glasfaser verbunden ist.

12. Ein System nach Anspruch 11, wobei die kabellose Verbindung nach Standards von Bluetooth, Wi-Fi, ZigBee realisiert wird.

13. Ein System nach Anspruch 8 bis 12, wobei das Gateway (5) eines lokalen Netzwerks über Kabel und/oder kabellos mit einem öffentlichen Netzwerk verbunden ist.

14. Ein System nach den Ansprüchen 8 bis 13, mit dem Gateway (5) eines lokalen Netzwerks, in dem die Kryptographie durch Software und/oder Hardware realisiert wird.

## Revendications

1. Procédé pour réaliser une connexion encryptée avec un réseau locale comprenant les étapes suivantes :
- l'échange directe entre une application cliente (1) et une passerelle (5) du réseau local d'une clé publique (K1', K2') de l'application cliente (1) et d'une clé publique (K3') de la passerelle (5), avant que l'application cliente (1) ne se connecte à un routeur VPN (3) ;
- l'envoi par l'application cliente (1) et par la passerelle (5) respectivement, de la clé publique (K1', K2') de l'application cliente (1) et de la clé publique (K3') de la passerelle (5) vers le routeur VPN (3), qui établit une relation des clés publiques (K1, K2', K3'),
- la connexion de la passerelle (5) au routeur VPN (3) au moyen d'un tunnel VPN interne (4);
- la vérification, par le routeur VPN (3), de la passerelle (5), basée sur la clé publique (K3') de la passerelle (5) et la relation des clés publiques ;
- la connexion de l'application cliente (1) au routeur VPN (3) via un tunnel VPN externe (2) ;
- la transmission par l'application cliente (1) de sa clé publique (K1', K2') au routeur VPN (3) ;
- la vérification de la clé publique (K1', K2') de l'application cliente (1) sur la base de la relation des clés publiques, effectuée par le routeur VPN (3);
- lors de la vérification de la clé publique (K1', K2') de l'application cliente (1), routage, par le routeur VPN (3), de la connexion entre l'application cliente (1) et la passerelle (5), conformément à la relation entre les clés publiques (K1', K2', K3') via le tunnel VPN externe (2) et le tunnel VPN interne (4) ;
- après le routage de la communication, la vérification de la clé publique (K1', K2') de l'application cliente (1) par la passerelle (5) et la vérification de la clé publique (K3') de la passerelle (5) par l'application cliente (1) ;
- la transmission par la passerelle (5) d'une clé secrète de cryptage symétrique cryptée au moyen de la clé publique (K1', K2') de l'application cliente (1) à l'application cliente (1)'
- l'obtention, par l'application cliente (1), de la clé secrète cryptée en utilisant une clé privée (K1, K2) de l'application cliente (1) correspondant à la clé publique (K1', K2') de l'application cliente (1) pour décrypter la clé secrète cryptée,
- l'échange de paquets cryptés entre le réseau local et l'application cliente (1) à l'aide de la clé secrète.

2. Procédé selon la revendication 1, dans lequel la production d'une clé privée (K3) de la passerelle (5) d'un réseau local est téléchargée dans la passerelle (5) d'un réseau local.

3. Procédé selon la revendication 1, dans lequel la clé publique (K1', K2') et/ou le clé privées (K1, K2) sont générées dans l'application cliente (1).

4. Procédé selon la revendication 1, dans lequel le routeur VPN (3) est implémenté en tant que serveur dans un réseau public.

5. Procédé selon la revendication 1, dans lequel le tunnel VPN interne (4) est créé tout en connectant la passerelle (5) d'un réseau local à un réseau public.

6. Procédé selon la revendication 1, dans lequel l'application cliente (1) émet des commandes et/ou télécharge des données à partir d'un dispositif d'automatisation (6).

7. Procédé selon la revendication 1, dans lequel le routeur VPN (3) a dans la base de données un ensemble de clés publiques des passerelles d'un réseau local et les clés publiques des applications clientes ainsi que les informations sur la relation entre les clés publiques des applications clientes et les clés publiques des passerelles d'un réseau local.

8. Un système comprenant des moyens configurés pour effectuer la méthode selon un revendication 1 à 7, dans lequel le système comprend en outre une application client (1) connectée via un tunnel VPN externe (2) via WebSocket vers un routeur VPN (3), qui à son tour est connecté à une passerelle (5) d'un réseau local via un tunnel VPN interne (4).

9. Système selon la revendication 8, dans lequel le routeur VPN est dans un nuage.

10. Système selon l'une quelconque des revendications 8 à 9, dans lequel la passerelle (5) d'un réseau local est connectée à au moins un dispositif d'automatisation (6).

11. Système selon la revendication 10, dans lequel la passerelle (5) d'un réseau local est connectée à au moins un dispositif d'automatisation (6) via au moins un moyen parmi: connexion sans fil, connexion filaire ou fibre optique.

12. Système selon la revendication 11, dans lequel la connexion sans fil est réalisée conformément à l'un des standards Bluetooth, Wi-Fi, ZigBee.

13. Système selon l'une quelconque des revendications 8 à 12, dans lequel la passerelle (5) d'un réseau local est connectée par fil et/ou sans fil à un réseau public.

14. Système selon l'une quelconque des revendications 8 à 13, la passerelle (5) d'un réseau local, la cryptographie est réalisée par le logiciel et/ou par le matériel.
